# EUROPÄISCHE PATENTSCHRIFT

(11) **EP 2 585 700 B1**
(45) Veröffentlichungstag und Bekanntmachung des Hinweises auf die Patenterteilung: **19.03.2014**
(21) Anmeldenummer: 11735592.5
(22) Anmeldetag: 22.06.2011
(51) Int. Cl.: F02D 19/08, F02M 37/00

(54) **BRENNSTOFFZUMESSEINRICHTUNG FÜR EINE BRENNKRAFTMASCHINE**
FUEL METERING SYSTEM IN AN INTERNAL COMBUSTION ENGINE
DISPOSITIF DE DOSAGE DE CARBURANT POUR MOTEUR A COMBUSTION INTERNE

(30) Priorität: 22.06.2010 DE 102010024635
(43) Veröffentlichungstag der Anmeldung: 01.05.2013
(73) Patentinhaber: A. Luhmann GmbH, 49152 Bad Essen (DE)
(72) Erfinder: LUHMANN, Alfred, 49152 Bad Essen (DE)
(74) Vertreter: Weeg, Thomas
(86) Internationale Anmeldenummer: PCT/EP2011/003085
(87) Internationale Veröffentlichungsnummer: WO 2011/160830

(56) Entgegenhaltungen:
- DE-A1-102007 051 677
- DE-U1- 20 310 824
- JP-A- 2004 144 076

## Beschreibung

Die Erfindung bezieht sich auf eine Brennstoffzumesseinrichtung für insbesondere eine selbstzündende, luftverdichtende Brennkraftmaschine mit einer Kraftstoffpumpe zur Förderung eines Kraftstoffes, wobei der Kraftstoff einem Tank entnehmbar und über eine Hochdruckpumupe einem Einspritzsystem der Brennkraftmaschine zuführbar ist und wobei vom Einspritzsystem über eine Rückführleitung im Einspritzsystem überflüssiger Kraftstoff rückführbar ist, und wobei der Tank als Druckmischbehälter mit einem Dampfdruckpufferraum zur Aufnahme eines ersten Kraftstoffes wie Dieselkraftstoff, Rapsöl, Sojaöl, Sonnenblumenöl, Palmöl oder Fetten und eines weiteren Kraftstoffes wie ein Liquified-Petroleum-Gas (LPG-Kraftstoff) ausgebildet ist und dem Druckmischbehälter als Tank über ein Entnahmeventil ein aus dem ersten Kraftstoff und dem zweiten Kraftstoff gebildetes, unter Druck bestehendes Kraftstoffgemisch entnehmbar und über die als Druckerhöhungspumpe ausgebildete Kraftstoffpumpe der Hochdruckpumpe des Einspritzsystems zuführbar ist.

Brennstoffzumesseinrichtungen sind z.B. mit einer Common-Rail-Einspritzung ausgerüstet, um z.B. auch Dieselkraftstoffe bei einer Kennfeld gesteuerten Einspritzung zu nutzen und um darüber den Verbrennungsprozess und die Motorlaufeigenschaften zu optimieren und Partikelemissionen zu reduzieren.

Um Partikelemissionen zu reduzieren, sind auch Brennstoffzumesseinrichtungen für die Zuführung von Kraftstoffgemischen bekannt geworden. So ist beispielsweise aus der DE 10 2004 011 414 A1 bekannt, durch die Einspritzung eines Kraftstoffgemisches aus Kraftstoffen unterschiedlicher Eigsnschahen die dieselmotorische Verbrennung mit der Gleichraumverbrennung des Ottomotors zu kombinieren, um daraus Vorteile hinsichtlich Leistung und Emissionen von Kraftstoffen zu gewinnen.

Aus dieser Druckschrift ist bekannt, eine Brennkraftmaschine so auszustatten, dass eine Kraftstoffmischung von einem unter einem relativ geringen Überdruck flüssig zu haltenden LPG-Kraftstoff und einem Dieselkraftstoff direkt in den Brennraum eingespritzt wird, wobei die Brennkraftmaschine als luftverdichtende Brennkraftmaschine ausgebildet ist und zwei Kraftstofftanks für die beiden Kraftstoffe aufweist. Den beiden Tanks ist ein Druckmischbehälter nachgeordnet, von dem das Kraftstoffgemisch über eine Hochdruckpumpe dem Einspritzsystem der Brennkraftmaschine zugeführt wird.

Bei der DE 10 2004 011 414 ist vorgesehen, dass die Kraftstoffpumpen innerhalb des jeweiligen Kraftstofftankes vorgesehen sind, wodurch sich keine Reparaturmöglichkeiten an den Kraftstoffpumpen bei einem vollen Tank ergeben. Zudem ist ein Druckmischbehälter vorgesehen, der randvoll gefüllt ist, so dass kein Ausdehnungsraum vorhanden ist, womit eine erhebliche Berstgefahr einhergeht.

Aus dem DE 203 10 824 U1 ist eine Verbrennungskraftmaschine mit Hochdruckeinspritzung eines flüssigen Kraftstoffgemisches der eingangs genannten Art bekannt, bei dem ein Kraftstoffgemisch in dem als Druckmischbehälter ausgebildeten Tank mit einem oberen Pufferraum zur Aufnahme des ersten Kraftstoffes wie Dieselkraftstoff und eines weiteren Kraftstoffes wie ein LPG-Kraftstoff wie Butan vorgesehen ist, und innerhalb des Druckmischbehälters die Kraftstoffpumpe zur Entnahme des Kraftstoffes angeordnet ist. Der über die Kraftstoffpumpe zu fördernde Kraftstoff wird ggf. einem Filter, ggf. einer weiteren Kraftstoffpumpe und der Hochdruckpumpe zur weiteren Förderung in das Einspritzsystem zugeführt. Vom Einspritzsystem kann ein überschüssiges Kraftstoffgemisch nach Druckabsenkung wiederum über eine Rückführleitung dem Druckmischbehälter zugeführt werden.

Nachteilig hierbei ist, dass wiederum die Kraftstoffpumpe innerhalb des Druckmischbehälters vorgesehen ist ohne Reparaturmöglichkeit bei einem vollen Tank. Zudem ist hierbei nachteilig, dass die Pumpen einem erhöhten Verschleiß unterliegen, da der überschüssige Kraftstoff von der Einspritzablage dem Druckmischbehälter zurückzuführen ist, was zu einer erhöhten Belastung von Kraftstoffpumpen, insbesondere der Hochdruckpumpe führt. Ebenfalls nachteilig ist, dass im Falle eines Wiederstarts des Motors in einem noch betriebswarmen Zustand eine Blasenbildung in Leitungen aufgrund ausgegaster Bestandteile im Kraftstoffgemisch nahezu unvermeidbar ist. Das sorgt für außerordentlich schlechte Wiederstarteigenschaften des Motors bis hin zu einem Motorausfall.

Es ist daher Aufgabe der vorliegenden Erfindung, eine Brennstoffzumesseinrichtung der vorgenannten Art zur Verfügung stellen, die zunächst die Möglichkeit darbietet, möglichst blasenfrei das Kraftstoffgemisch zu entnehmen, gleichwohl jedoch Aggregatteile wie z.B. Pumpen von außen her zu warten und zu reparieren. Darüber hinaus soll bevorzugtermaßen die Brennstoffzumesseinrichtung in der Lage sein, so weitergebildet zu werden, dass sie verbesserte Starreigenschaften des Motors auch in einem betriebswarmen Zustand ermöglicht.

Zur Lösung dieser Aufgabe zeichnet sich die Brennstoffzumesseinrichtung der eingangs genannten Art dadurch aus, dass die Entnahme des unter Druck stehenden Kraftstoffgemisches über das Entnahmeventil über eine im unteren Bereich des Tankes gelegene Wandung erfolgt, so dass ein statischer Druck auf dem Entnahmeventil lastet und dass die als Druckerhöhungspumpe ausgebildete Kraftstoffpumpe dem Entnahmeventil in Strömungsrichtung des Kraftstoffgemisches außerhalb des Druckmischbehälters nachgeordnet ist, wobei der Kraftstoffpumpe in Strömungsrichtung des Kraftstoffes nachgeordnet und dem Einspritzsystem vorgeordnet ein Überdruck- und Bypassventil zur Rückführung des Kraftstoffgemisches über die Rückführleitung in den Druckmischbehälter vorgesehen ist.

Damit ist eine Brennstoffzumesseinrichtung zur Verfügung gestellt, bei der eine Mischung aus einem Kraftstoff für Dieselmotoren verwendet wird, wobei auch ein Mischen mit Propan und Butan, das aus Biomasse aus nachwachsenden Rohstoffen hergestellt worden ist, Verwendung finden kann.

Dieses Kraftstoffgemisch kann als fertige unter Druck stehende Kraftstoffmischung dem Druckmischbehälter als Kraftstofftank zugeführt und mitgeführt werden. Durch entsprechende Ventile an dem Mischbehälter wird dieses Kraftstoffgemisch unter Druck gehalten. Dieses Kraftstoffgemisch kann beispielsweise aus Drucktankstellen in den Druckmischbehälter als Fahrzeugtank gedrückt werden. Dies kann durch instationär oder stationär betriebene Drucktankstellen erfolgen. Alternativ ist es selbstverständlich auch möglich, z.B. Dieselkraftstoff, Rapsöl, Sojaöl, Sonnenblumenöl, Palmöl oder Fette separat in den Druckmischbehälter als Tank hineinzupumpen und danach das unter Druck stehende Flüssiggas wie Propan oder Butan zuzumischen, wobei sich ein derartiger Druck innerhalb des Tankes selbsttätig aufbaut, bei dem sich Dieselkraftstoff, Rapsöl, Sojaöl, Sonnenblumenöl, Palmöl oder Fette und das Flüssiggas so vermischen, dass es direkt der Einspritzanlage der Brennkraftmaschine als Kraftstoffdruckgemisch zugegeben wird. Auf den besonderen Druckmischbehälter, wie er noch in der deutschen Patentanmeldung 10 2008 063 278 vorgesehen ist, kann dabei verzichtet werden. Da die Gasflüssigkeit ein spezifisches Gewicht von ca. 500 g/l hat, Rapsöl z.B. ein spezifisches Gewicht von ca. 900 g/l, wird durch den Druckaufbau innerhalb des Druckmischsystems die ansonsten übliche Sedimentation verhindert. Da Rapsöle annähernd CO2-reduziert verbrennen und ein LPG-Kraftstoff annähernd rußfrei verbrennt, lassen sich erhebliche Emissionen einsparen. Rapsöl kann beispielsweise auch eingesetzt werden, ohne dass es erforderlich ist, dass die Brennkraftmaschine erst warm läuft. Vielmehr ist ein Rapsöl-Butan- bzw. Rapsöl-Propan-Gemisch so einzustellen, dass die Brennkraftmaschine betrieben werden kann wie mit einem heutigen üblichen Dieselkraftstoff. Wird Butan und Propan aus Biomasse hergestellt, kann eine völlig CO2-neutrale Verbrennung in der Brennkraftmaschine stattfinden.

Auch ein zähflüssiges Pflanzenöl wird durch die Beimischung von der unter Druck stehendem Propan-/Butan-Flüssigkeit so dünnflüssig wie ein Dieselkraftstoff und zerstäubt auch während der Einspritzung so fein wie ein herkömmlicher Dieselkraftstoof. Dadurch ist eine sehr seubere Verbrennung und eine damit einhergehende bessere Abgasqualität zu erzielen. Weiterhin entfällt eine sonst übliche Montage der herkömmlichen Pflanzenöleaufbereitung, um bei kalten Temperaturen ein Starten des Motors zu ermöglichen.

Durch die Herstellung dieses Kraftstoffgemisches ist eine ideale Kombination aus nachwachsenden erneuerbaren Biokraftstoffen und sauber verbrennbaren Flüssigkraftstoffen ermöglicht. Durch die Verwendung von biogenem Propan-/Butan und Pflanzenöl ist eine fast 100 %ige CO2-Neutralität des Kraftstoffes ermöglicht. Da bei einem Mischungsverhältnis 50 : 50 nur die halbe Menge Pflanzenöl zur Einspritzung gelangt, kann daraus resultierend ein Ölwechselintervall um das doppelte erweitert werden. Der Druckmischbehälter ist absolut sicher an einem Fahrzeug vorzusehen. Alle vorgesehenen Ventile im Druckmischbehälter sind geschützt und beispielsweise mit einer Rückschlagsicherung aus einer Feder auszurüsten. Ein entsprechendes Schutzgehäuse kann überdimensional und annähernd formschlüssig ausgebildet werden, wobei eine Überdrucköffnung abschließbar ausgebildet sein kann.

Insgesamt ist damit eine Brennstoffzumesseinrichtung zur Verfügung gestellt, mit der eine herkömmliche Brennkraftmaschine nachzurüsten ist, die danach mit einem deutlich verringerten Emissionsverhalten betrieben werden und aufgrund der preislichen Vorteile der eingesetzten Kraftstoffe auch wesentlich kostengünstiger betrieben werden kann.

Dadurch, dass das Entnahmeventil in einem unteren Bereich des Tanks an einer wandung vorgesehen ist, steht immer der statische Druck des Kraftstoffgemisches auf dem Entnahmeventil, wodurch bei Entnahme eine Blasenbildung verhindert ist. Die sich in Strömungsrichtung daran anschließende Kraftstoffpumpe als Druckerhöhungspumpe kann mithin mit dem erforderlichen Druck das Kraftstoffgemisch entnehmen und blasenfrei weiter fördern. Über das in Strömungsrichtung vor der Einspritzanlage vorgesehen Überdruck- und Bypassventil kann bei Überdruck das Kraftstoffgemisch in aggregatschonender Weise in den Druckmischbehälter zurückgeführt werden.

Besonders vorteilhaft ist, wenn zwischen der Hochdruckpumpe und der Druckerhöhungspumpe das Überdruck und Bypassventil angeordnet wird, um darüber das Kraftstoffgemisch dem Druckmischbehälter im Falle eines Überdruckes rückzuführen. Dadurch wird die Hochdruckpumpe in erheblichem Maße geschont.

Besonders bevorzugt wird, wenn ein zweiter Tank mit einem Dampfdruckpufferraum zur Aufnahme des ersten Kraftstoffes wie Dieselkraftstoff, Rapsöl, Sojaöl, Sonnenblumenöl, Palmöl oder Fetten als Starterkraftstoff vorgesehen ist. Im Falle des Abstellens des Motors und bei einem beabsichtigten Wiederstart kann es ansonsten zu Blasenbildungen in dem Zuführsystem des Kraftstoffgemisches kommen, was einen Wiederstart der selbstzündenden luftverdichtenden Brennkraftmaschine verhindern kann. Für diesen Fall wird der Dieselkraftstoff oder andere Kraftstoffe ohne LPG-Anteil als Starterkraftstoff eingesetzt, wobei die dazu vorgesehenen Komponenten derart vorgesehen sind, dass sie in der Lage sind, zuvor etwaige Blasen aus dem Kraftstoffgemischzuführsystem herauszubringen.

Dazu ist nach der Erfindung vorgesehen, dass über den Tank des Starterkraftstoffes über eine Förderpumpe der Starterkraftstoff entnehmbar und über die Hochdruckpumpe der Einspritzanlage zugeführt werden kann, und zwar wiederum über die Hochdruckpumpe, wobei zuvor die Druckerhöhungspumpe des Druckmischbehälters und die Förderpumpe des Tanks des Starterkraftstoffes sowie ein entsprechendes Umschaltventil in der Zuführleitung der Kraftstoffgemischzuführung von einer Steuereinheit in dem Sinne gesteuert werden, dass das Umschaltventil derart umschaltet, dass die Zuführleitung für den Starterkraftstoff freigegeben wird, die Druckerhöhungspumpe des Druckmischbehälters für das Kraftstoffgemisch ausgeschaltet und die Kraftstoffpumpe für den Starterkraftstoff eingeschaltet wird. Dies kann nach dem Stoppen der Brennkraftmaschine unabhängig von der Maßnahme eines einen Wiederstarts erfolgen, wobei die Kraftstoffpumpe für den Starterkraftstoff ein geringfügig größeren Druck erzeugt als die Druckerhöhungspumpe des Druckmischbehälters, so dass der Starterkraftstoff in der Lage ist aufgrund des Überdruckes, das Kraftstoffgemisch und die Blasen aus dem Zuführsystem der Brennstoffzumesseinrichtung herauszudrängen, wozu auch entsprechende Ventile in Rückführleitungen geöffnet werden. Bei einem Wiederstart erfolgt dann das Starten des Motors allein mit dem Starterkraftstoff wie beispielsweise dem Dieselkraftstoff, was ohne Probleme möglich ist. Nach dem Startvorgang sichert die Steuereinheit die Umschaltung auf den Betrieb mit dem Kraftstoffgemisch, damit ein weiterer sicherer Betrieb der Brennkraftmaschine mit dem Kraftstoffgemisch ermöglicht ist. Damit sind die Betriebseigenschaften des Motors wesentlich zu verbessern und die sonstigen Vorteile des Betriebes der Brennkraftmaschine mit dem Kraftstoffgemisch nicht bzw. nicht wesentlich beeinträchtigt.

Zur weiteren Erläuterung wird auf weitere Unteransprüche, die nachfolgende Beschreibung und die Zeichnung verwiesen. In der Zeichnung zeigen:
- Fig. 1: veranschaulicht ein Anlagenschema der Brennstoffzumesseinrichtung in Verbindung mit dem Einspritzsystem einer Brennkraftmaschine;
- Fig. 2: schematisch den unteren Bereich eines Tankes mit dem Entnahmeventil und einer Schutzanordnung im noch nicht montierten Zustand;
- Fig. 3: eine zu Fig. 2 analoge Darstellung mit der montierten Schutzanordnung
- Fig. 4: veranschaulicht ein Anlagenschema der Brennstoffzumesseinrichtung in Verbindung mit dem Einspritzsystem der Brennkraftmaschine, bei dem zusätzlich ein zweiter Tank für einen Starterkraftstoff wie einen Dieselkraftstoff vorgesehen ist.

In der Zeichnung ist allgemein mit 1 beziffert ein Sicherheitsventil mit integriertem Füllstop, um einen Dampfpufferraum von ca. 15 % des Behältervolumens sicherzustellen, mit 2 ein Füllventil, mit 3 ist eine Rücklaufleitung und mit 4 eine Inhaltsanzeige eines als Druckmischbehälters 12 ausgebildeten bezifferten Tankes der nicht näher dargestellten Brennkraftmaschine beziffert. Innerhalb des Drucktankes 12 ist das unter Druck stehende Kraftstoffgemisch aus Dieselkraftstoff, Rapsöl, Sojaöl, Sonnenblumenöl, Palmöl oder Fetten und einem LPG-Kraftstoff wie Propan oder Butan dargestellt. Oberhalb des Füllspiegels befindet sich ein Dampfdruckpufferraum. im dargestellten Ausführungsbeispiel ist das Gemisch als fertiges, unter Druck stehendes Gemisch über das Füllventil eingeleitet worden.

An der tiefsten Stelle des Drucktankes 12, also dort, wo ein statischer Druck aufgrund des eingefüllten Kraftstoffes ansteht, an der Entnahmeleitung, die das Entnahmeventil 5 beinhaltet, ist eine etwaige Gasblasenbildung in der Leitung sicher verhindert. Dies wird unterstützt durch die dem Entnahmeventil 5 nachgeordnete Druckerhöhungspumpe 6, von der das unter Druck stehende Kraftstoffgemisch der Hochdruckpumpe 7 zugeführt wird, mit der das Kraftstoffgemisch auf einen Druck von ca. 1.600 bar gebracht werden kann. Der Hochdruckpumpe 7 nachgeordnet ist ein Überdruck- und Bypassventil 8. Von dort kann das unter Druck stehende Kraftstoffgemisch dem Common-Rail-Einspritzsystem 9 mit den Einspritzelementen 10 zugeführt werden. Von dort kann überschüssiger Kraftstoff über die Rücklaufleitung 11 dem Druckmischbehälter 12 wieder zugeführt werden. In einer anderen Stellung des Überdruck und Bypassventiles kann zudem von diesem Ventil noch überschüssiger Kraftstoff über die Leitung 11 ebenfalls dem Druckmischbehälter 12 wieder rückgeführt werden.

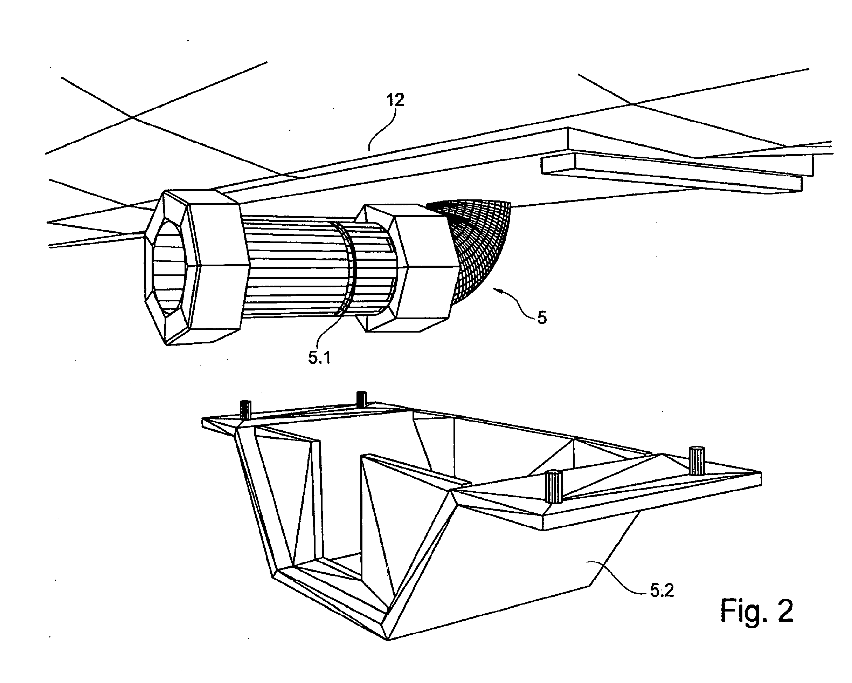

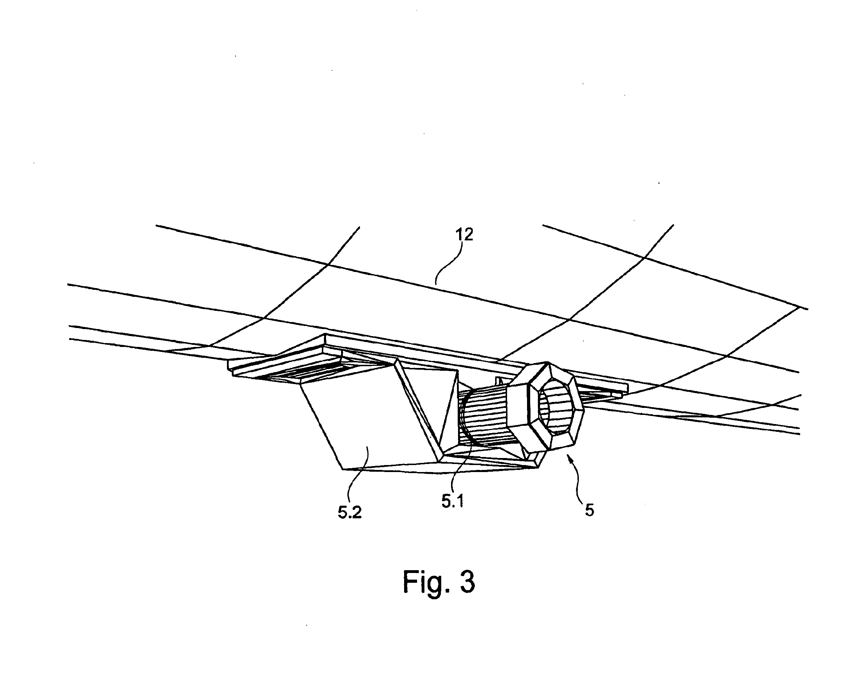

In den Fig. 2 und 3 ist der Druckmischbehälter 12 angedeutet mit dem Entnahmeventil 5. Bei 5.1 ist eine Sollbruchstelle angedeutet. Im Inneren, im Einzelnen nicht näher sichtbar, sind zwei Kugeln vorgesehen, die federbelastet sind und die bei einem Bruch eines Teils des Ventils an der Sollbruchstelle in jeweilige Kugelsitze gebracht werden und den Kraftstofftank sicher abdichten. Zudem kann das Teil 5.2 als Schutzkappe über das Entnahmeventil gebracht werden, wie dies näher in Fig. 3 dargestellt ist. Damit ist das Entnahmeventil 5 bis zur Sollbruchstelle 5.1 sicher nach außen hin abgeschottet.

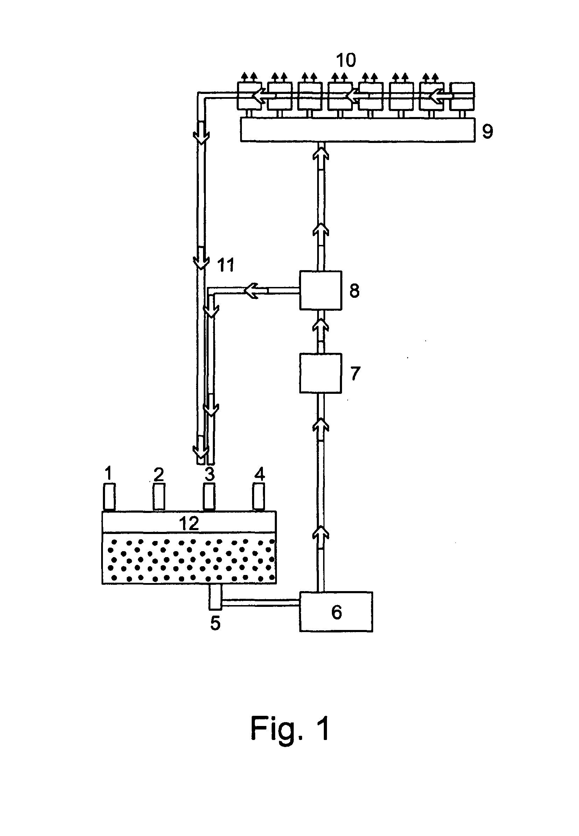

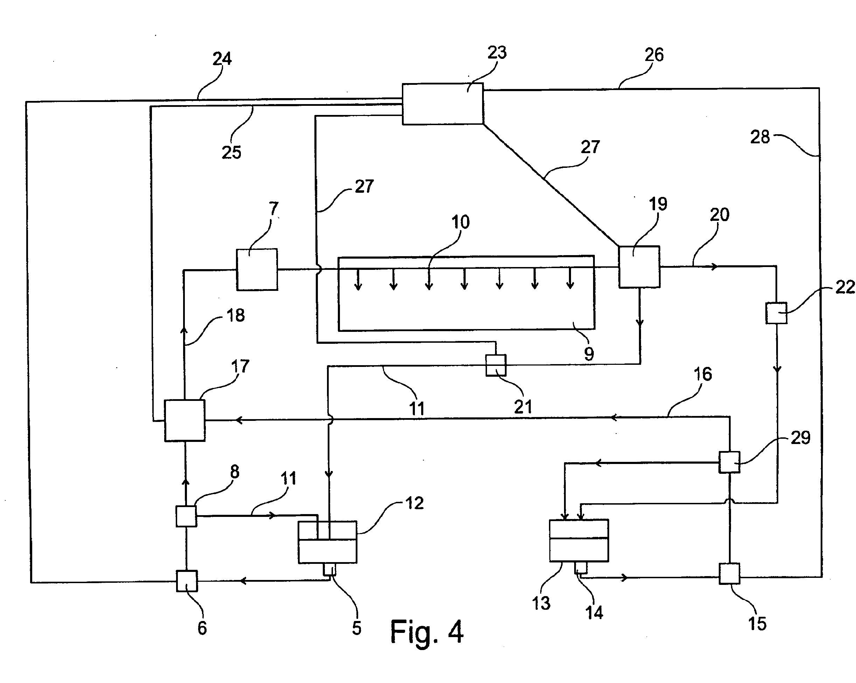

In Fig. 4 ist das Anlagenschema von Fig. 1 wiedergegeben mit identischer Bezifferung der Teile, ergänzt um Anlagenkomponenten mit einem zweiten Tank 13 für einen Starterkraftstoff wie beispielsweise einen Dieselkraftstoff. Dieser zusätzliche Tank 13 ist ebenfalls mit einem Pufferraum ausgestattet. Über ein Entnahmeventil 14 ist über eine Förderpumpe 15 Starterkraftstoff über die Zuführleitung 16 an ein Umschaltventil 17 zu fördern. Über dieses Umschaltventil 17 kann der Starterkraftstoff in die Zuführleitung 18 des Kraftstoffgemisches des Druckmischbehälters 12 gelangen und von dort aus über die Hochdruckpumpe 7 in das Einspritzsystem 9, 10.

Es ist ein weiteres Umschaltventil 19 der Einspritzanlage 9, 10 nachgeordnet, von dem die Rückführleitung 11 das Kraftstoffgemisch zu dem Druckmischbehälter 12 ausgeht und eine weitere Rückführleitung 20 zu dem Tank 13 für den Starterkraftstoff. In beiden Rückführleitungen 11 und 20 sind Kontrolleinheiten 21 und 22 vorgesehen zur Überprüfung des Rücklaufes entweder des Kraftstoffgemisches oder des Starterkraftstoffes.

Alle Einheiten werden beherrscht von einem zentralen Steuergerät 23. Dieses Steuergerät 23 ist über eine Leitung 24 mit der Druckerhöhungspumpe 6, über eine Leitung 25 mit dem Umschaltventil 17, über eine Leitung 26 mit der Förderpumpe 15 und über eine Leitung 27 mit dem Umschaltventil 19 verbunden. Ebenfalls sind die Kontrolleinheiten 21 und 22 über Steuerleitungen 27 und 28 mit dem Steuergerät 23 verbunden, so dass dieses elektrische Signale aussenden und empfangen kann, um die entsprechenden mit dem Steuergerät 23 verbundenen Pumpen und Ventile zu steuern bzw. von den Kontrolleinheiten entsprechende Signale für den weiteren Steuerungsprozess zu empfangen.

Detektiert die Steuereinrichtung ein Abschalten der Brennkraftmaschine, schaltet sie das Umschaltventil 17 in den Starterbetrieb, so dass die Zuführleitung 18 für das Kraftstoffgemisch geschlossen wird. Parallel empfängt von der Steuereinheit 23 die Druckerhöhungspumpe 6 ein Signal und schaltet ab. Die Förderpumpe 15 wird eingeschaltet, so dass über das Entnahmeventil 14 mit einem höheren Druck der Starterkraftstoff wie ein Dieselkraftstoff über die Zuführleitung 16 in die Zuführleitung 18 gefördert wird und für einen nachfolgenden Startvorgang über die Hochdruckpumpe 7 der Einspritzanlage 9, 10 zugeführt wird, so dass der Starterprozess mit dem Starterkraftstoff erfolgen kann, wobei zuvor etwaige Blasen des Kraftstoffgemisches weggeführt wurden. Ist während der Startphase überflüssiger Starterkraftstoff vorhanden, kann dieser über das Umschaltventil 19 über die Rücklaufleitung 20 dem Tank 13 für den Starterkraftstoff zugeführt werden. Ist die Brennkraftmaschine wiederum in Betrieb, schaltet das Steuergerät 23 die Startereinheit mit der Pumpe 15 ab. Die Umschaltventile 17 und 19 werden umgeschaltet und die Druckerhöhungspumpe 6 wiederum in Betrieb genommen, so dass auf den Normalbetrieb mit dem Kraftstoffgemisch umgeschaltet ist.

## Patentansprüche

1. Brennstoffzumesseinrichtung für insbesondere eine selbstzündende, luftverdichtende Brennkraftmaschine mit einer Kraftstoffpumpe (6) zur Förderung eines Kraftstoffes, wobei der Kraftstoff einem Tank entnehmbar und über eine Hochdruckpumpe (7) einem Einspritzsystem (9, 10) der Brennkraftmaschine zuführbar ist, und wobei vom Einspritzsystem (9, 10) über eine Rückführleitung (11) im Einspritzsystem überflüssiger Kraftstoff rückführbar ist, wobei der Tank als Druckmischbehälter (12) mit einem Dampfdruckpufferraum zur Aufnahme eines ersten Kraftstoffes wie Dieselkraftstoff, Rapsöl, Sojaöl, Sonnenblumenöl, Palmöl oder Fetten und eines weiteren Kraftstoffes wie ein Liquified-Petroleum-Gas (LPG)-Kraftstoff ausgebildet ist und dem Druckmischbehälter (12) als Tank über ein Entnahmeventil (4) ein aus dem ersten Kraftstoff und dem zweiten Kraftstoff gebildetes, unter Druck stehendes Kraftstoffgemisch entnehmbahr und über als Druckerhöhungspumpe ausgebildete Kraftstoffpumpe (5) unter Hochdruckpumpe (7) des Einspritzsystems (9, 10) zuführbar ist, **dadurch gekennzeichnet, dass** die Entnahme des unter Druck stehendes Kraftstoffgemisches über das Entnahmeventil (5) über eine im unteren Bereich des Tanks gelegene Wandung erfolgt, so dass ein statischer Druck auf dem Entnahmeventil (5) lastet und die als Druckerhöhungspumpe ausgebildete Kraftstoffpumpe (6) dem Entnahmeventil in Strömungsrichtung des Kraftstoffgemisches außerhalb des Druckmischbehälters 12 nachgeordnet ist, wobei der Kraftstoffpumpe (5) in Strömungsrichtung des Kraftstoffes nachgeordnet und dem Einspritzsystem (9,10) vorgeordnet ein Überdruck- und Bypassventil (8) zur Rückführung des Kraftstoffgemisches über die Rückführleitung (11) in den Druckmischbehälter (12) vorgesehen ist.

2. Brennstoffzumesseinrichtung nach Anspruch 1, **dadurch gekennzeichnet, dass** der Druckmischbehälter (12) als Tank mit einem Füllventil (2) für den ersten Kraftstoff und mit einem Füllventil (2) für den zweiten Kraftstoff ausgerüstet ist und der erste Kraftstoff und der zweite Kraftstoff dem Druckmischbehälter (12) jeweils separat zuführbar sind, wobei innerhalb des Druckmischbehälters (12) das unter Druck stehende Kraftstoffgemisch selbsttätig erzeugt wird.

3. Brennstoffzumesseinrichtung nach Anspruch 1 oder 2, **dadurch gekennzeichnet, dass** zwischen dem Entnahmeventil (5) und der Hochdruckpumpe (7) in der Kraftstoffmischleitung die Druckerhöhungspumpe (6) angeordnet und zwischen der Hochdruckpumpe (7) und der Druckerhöhungspumpe (6) das Überdrück- und Bypassventil (8) angeordnet ist, über das ein Kraftstoffgemisch dem Druckmischbehälter (12) zuführbar ist.

4. Brennstoffzumesseinrichtung nach einem der Ansprüche 1 bis 3, **dadurch gekennzeichnet, dass** zwischen dem Kraftstoffeinspritzsystem (9, 10) und der Hochdruckpumpe (7) ein Überdruck- und Bypassventil (8) angeordnet ist, über das ein Kraftstoffgemisch dem Druckmischbehälter (12) zuführbar ist.

5. Brennstoffzumesseinrichtung nach einem der Ansprüche 1 bis 4, **dadurch gekennzeichnet, dass** am Druckmischbehälter (12) im Bereich des Dampfdruckpufferraumes ein Sicherheitsventil (1) vorgesehen ist.

6. Brennstoffzumesseinrichtung nach einem der Ansprüche 1 bis 5, **dadurch gekennzeichnet, dass** alle Ventile am Druckmischbehälter (12) mit einem Gehäuseschutz versehen sind.

7. Brennstoffzumesseinrichtung nach einem der Ansprüche 1 bis 6, **dadurch gekennzeichnet, dass** das Entnahmeventil (5) im Druckmischbehälter (12) durch eine federbelastete Rückschlagsicherung geschützt ist.

## Claims

1. Fuel metering device, in particular for a self-igniting, air-compressing internal combustion engine, comprising a fuel pump (6) for conveying a fuel, it being possible for the fuel to be removed from a tank and supplied via a high pressure pump (7) to an injection system (9, 10) of the internal combustion engine, and it being possible for excess fuel to be returned from the injection system (9, 10) via a return line(11) in the injection system, the tank being designed as a pressure mixing container (12) having a vapour pressure buffer chamber for receiving a first fuel, such as diesel fuel, rapeseed oil, soybean oil, sunflower oil, palm oil or fats, and another fuel such as liquefied petroleum gas (LPG fuel), and it being possible for a pressurised fuel mixture formed from the first fuel and the second fuel to beremoved from the pressurised mixing container (12),as a tank,via a removal valve (4) and fedto the high-pressure pump (7) of the injection system (9, 10) via the fuel pump (5) designed as a booster pump, characterised in thatthe pressurised fuel mixture is removed via the removal valve (5) via a wall that is arranged in the lower area of the tank, so that a static pressure loads the removal valve (5), and the fuel pump (6) designed as a booster pump is arranged downstream of the removal valve in the flow direction of the fuel mixture outside of the pressurised mixing container (12), an overpressure and bypass valve (8) being provided, in the flow direction of the fuel downstream of the fuel pump (5) and upstream of the injection system (9, 10), for returning the fuel mixture into the pressurised mixing container (12) via the return line (11).

2. Fuel metering device according to claim 1, **characterised in that** the pressure mixing container (12), as the tank, is equipped with a filling valve (2) for the first fuel and with a filling valve (2) for the second fuel, and the first fuel and the second fuel can each befed separately to the pressurised mixing container (12), the pressurised fuel mixture being automatically produced within the pressurised mixing container (12).

3. Fuel metering device according to either claim 1 or claim 2, characterised in thatthe booster pump (6) is arranged in the fuel mixture line between the removal valve (5) and the high-pressure pump (7), and the overpressure and bypass valve (8) is arranged between the high-pressure pump (7) and the booster pump (6) and can be used to feedafuel mixture to the pressurised mixing container (12).

4. Fuel metering device according to any of claims 1 to 3, characterised in thatan overpressure and bypass valve (8) is arranged between the fuel injection system (9, 10) and the high-pressure pump (7) and can be used to feedafuel mixture to the pressurised mixing container (12).

5. Fuel metering device according to any of claims 1 to 4, **characterised in that** a safety valve (1) is providedon the pressurised mixing container (12) in the area of the vapour pressure buffer chamber.

6. Fuel metering device according to any of claims 1 to 5, characterised in thateach valve on the pressurised mixing container (12) is provided with a housing guard.

7. Fuel metering device according to any of claims 1 to 6, characterised in thatthe removal valve (5) is protected within the pressurised mixing container (12)by a springloaded safety device.

## Revendications

1. Dispositif de dosage de carburant en particulier pour un moteur à combustion interne à autoallumage, à compression d'air avec une pompe à carburant (6) pour l'acheminement d'un carburant, le carburant pouvant être prélevé d'un réservoir et amené par une pompe haute pression (7) à un système d'injection (9, 10) du moteur à combustion interne, et du carburant excédentaire pouvant être ramené du système d'injection (9, 10) par une conduite de retour (11) dans le système d'injection, le réservoir étant réalisé comme un récipient de mélange de pression (12) avec un espace intermédiaire de pression de vapeur pour la réception d'un premier carburant tel que du gazole, de l'huile de colza, de l'huile de soja, de l'huile de tournesol, de l'huile de palme ou des graisses et un autre carburant tel qu'un gaz de pétrole liquéfié (GPL) et un mélange de carburant sous pression formé à partir du premier et du second carburants, pouvant être prélevé du récipient de mélange de pression (12) servant de réservoir par une soupape de prélèvement (4) et pouvant être amené à celui-ci par une pompe à carburant (5) réalisée comme une pompe de surpression sous une pompe haute pression (7) du système d'injection (9, 10), **caractérisé en ce que** le prélèvement du mélange de carburant sous pression est réalisé par le biais de la soupape de prélèvement (5) au-dessus d'une paroi placée dans la zone inferieure du réservoir de sorte qu'une pression statique pèse sur la soupape de prélèvement (5) et que la pompe à carburant (6) réalisée comme pompe de surpression soit disposée en aval de la soupape de prélèvement dans le sens d'écoulement du mélange de carburant en dehors du récipient de mélange de pression (12), une soupape de surpression et de dérivation (8) étant prévue pour ramener le mélange de carburant par la conduite de retour (11) dans le récipient de mélange de pression (12) et placée en aval de la pompe à carburant (5) dans le sens d'écoulement du carburant et en amont du système d'injection (9, 10).

2. Dispositif de dosage de carburant selon la revendication 1, **caractérisé en ce que** le récipient de mélange de pression (12) est équipé comme un réservoir d'une soupape de remplissage (2) pour le premier carburant et d'une soupape de remplissage (2) pour le second carburant et le premier carburant et le second carburant peuvent être amenés respectivement séparément au récipient de mélange de pression (12), le mélange de carburant sous pression étant généré automatiquement dans le récipient de mélange de pression (12).

3. Dispositif de dosage de carburant selon la revendication 1 ou 2, **caractérisé en ce que** la pompe de surpression (6) est disposée entre la soupape de prélèvement (5) et la pompe haute pression (7) dans la conduite de mélange de carburant et la soupape de surpression et de dérivation (8) est disposée entre la pompe haute pression (7) et la pompe de surpression (6), par laquelle soupape un mélange de carburant peut être amené au récipient de mélange de pression (12).

4. Dispositif de dosage de carburant selon l'une quelconque des revendications 1 à 3, **caractérisé en ce qu'**une soupape de surpression et de dérivation (8) est disposée entre le système d'injection de carburant (9, 10) et la pompe haute pression (7), par laquelle soupape un mélange de carburant peut être amené au récipient de mélange de pression (12).

5. Dispositif de dosage de carburant selon l'une quelconque des revendications 1 à 4, **caractérisé en ce qu'**une soupape de sécurité (1) est prévue sur le récipient de mélange de pression (12) dans la zone de l'espace intermédiaire de pression de vapeur.

6. Dispositif de dosage de carburant selon l'une quelconque des revendications 1 à 5, **caractérisé en ce que** toutes les soupapes sur le récipient de mélange de pression (12) sont pourvues d'un boîtier de protection.

7. Dispositif de dosage de carburant selon l'une quelconque des revendications 1 à 6, **caractérisé en ce que** la soupape de prélèvement (5) est protégée dans le récipient de mélange de pression (12) par une protection antiretour sollicitée par ressort.
